# EUROPÄISCHE PATENTSCHRIFT

(11) **EP 1 632 463 B1**
(45) Veröffentlichungstag und Bekanntmachung des Hinweises auf die Patenterteilung: **14.10.2009**
(21) Anmeldenummer: 05018756.6
(22) Anmeldetag: 30.08.2005
(51) Int. Cl.: C04B 37/02

(54) **Werkstoffverbund**
Composite material
Materiau composite

(30) Priorität: 06.09.2004 AT 6592004
(43) Veröffentlichungstag der Anmeldung: 08.03.2006
(73) Patentinhaber: PLANSEE SE, 6600 Reutte (AT)
(72) Erfinder: Schedler, Bertram, 6600 Reutte (AT); Schedle, Dietmar, 6600 Reutte (AT); Scheiber, Karlheinz, 6600 Breitenwang (AT); Huber, Thomas, 6600 Breitenwang (AT); Zabernig, Anton, 6600 Reutte (AT); Friedle, Hans-Dieter, 6651 Häselgehr (AT); Friedrich, Thomas, 87642 Halblech (DE)

(56) Entgegenhaltungen:
- EP-A- 0 115 577
- EP-A- 0 638 530
- EP-A- 0 663 670
- WO-A-20/05037734
- US-A- 4 358 506
- US-A- 5 410 796
- US-A- 5 806 588
- US-A- 5 855 313
- US-B1- 6 443 354
- APPENDINO P ET AL: "Joining of C/C composites to copper" FUSION ENGINEERING AND DESIGN, ELSEVIER SCIENCE PUBLISHERS, AMSTERDAM, NL, Bd. 66-68, September 2003 (2003-09), Seiten 225-229, XP004456477 ISSN: 0920-3796
- APPENDINO P ET AL: "Direct joining of CFC to copper" JOURNAL OF NUCLEAR MATERIALS, AMSTERDAM, NL, Bd. 329-333, 1. August 2004 (2004-08-01), Seiten 1563-1566, XP004795856 ISSN: 0022-3115
- PATENT ABSTRACTS OF JAPAN Bd. 014, Nr. 106 (C-0694), 27. Februar 1990 (1990-02-27) & JP 01 308884 A (TOSHIBA CORP), 13. Dezember 1989 (1989-12-13)

## Beschreibung

Die Erfindung betrifft einen Werkstoffverbund, der zumindest einen Bereich aus Kupfer oder einer Kupferlegierung, zumindest einen Bereich aus einem überwiegend grafitischen Werkstoff und zumindest einen dazwischen liegenden Fügebereich umfasst und ein Verfahren zu dessen Herstellung.

Ein typisches Beispiel für den Einsatz derartiger Werkstoffverbunde sind Kühleinrichtungen, wie beispielsweise Divertor und Limiter für Fusionsreaktoren. Derartige Werkstoffverbunde umfassen dabei typischerweise Bereiche aus Rein-Kupfer, beispielsweise aus sauerstoffarmem Kupfer (OFHC) und Bereiche aus Grafit, beispielsweise aus Kohlefaser-verstärktem Grafit (CFC), die stoffschlüssig miteinander verbunden sind. Das stoffschlüssige Verbinden kann durch Hintergießen erfolgen, wie dies beispielsweise in der EP 0 663 670 B1 beschrieben ist. Es können jedoch auch Löt- oder druckunterstützte Verbindungstechnikverfahren (z.B. HIP) eingesetzt werden. Die Fügeflächen des Kupfer- und des Grafitbereiches, die den Fügebereich begrenzen, können dabei eben oder gekrümmt ausgeführt sein. Ein Beispiel für eine ebene Ausführung ist ein Flachziegel-Divertor. Eine gekrümmte Fügefläche liegt beispielsweise bei einem Rohr-Divertorelement vor. Dabei weist der Grafitteil eine Bohrung auf, deren Wandung mit Reinkupfer stoffschlüssig verbunden ist, welches wiederum mit einem Rohr aus einer Kupferlegierung (z.B. Cu-Cr-Zr), in dem Kühlmittel fließt, stoffschlüssig verbunden ist. Das mit dem grafitischen Werkstoff stoffschlüssig verbundene Reinkupfer hat die Funktion, die Wärmeabfuhr sicherzustellen. Daneben kann es auch die Funktion des Spannungsabbaus übernehmen, wie dies der Fall ist, wenn Grafit über eine Reinkupfer-Zwischenlage mit einer hochfesten Kupferlegierung (z.B. Cu-Cr-Zr) verbunden wird. Neben den Bereichen aus Grafit und einem oder mehreren Kupferwerkstoffen können derartige Kühleinrichtungen auch weitere Bereiche, zum Beispiel aus Stahl oder einer Wolframlegierung (z.B. W-1Gew.%La₂O₃) aufweisen.

In jedem Fall stellt dabei der Fügebereich zwischen Grafit und Kupfer den Schwachpunkt derartiger Werkstoffverbunde dar. Ein Verfahren zur Herstellung von Kühleinrichtungen mit verbesserter Festigkeit im Fügebereich wird in der EP 0 663 670 B1 beschrieben. Dabei wird das Metall der Kühleinrichtung in schmelzflüssigem Zustand mit den Teilen eines hitzebeständigen Materials in Kontakt gebracht, wobei während des Verbindungsvorganges im Fügebereich Anteile von einem oder mehreren Metallen der IV. und / oder V. Nebengruppe des Periodensystems bereitgestellt werden.

In Appendino P. et al, Journal of Nuclear Materials, Bd. 329-333 (2004) p1563 - 1566 ist das Hintergießen von CFC mit Kupfer beschrieben, wobei als Aktivierung ein Element der VI b Gruppe, im Besonderen Molybdän oder Chrom, verwendet wird. Der CFC kann dabei auch Silizium in Form von elementarem Silizium und SiC enthalten.
In Appendino P. et al, Fusion Engineering and Design, Bd. 66-68 (2003) p225-229 sind mögliche Herstellverfahren für Erste-Wand-Komponenten beschrieben. Dabei wird ein mit Silizium gedopter CFC mit Kupfer durch einen Hintergießprozess unter Verwendung einer Aktivierung mit einem Übergangsmetall oder durch einen Lötprozess unter Verwendung eines Titan-Kupfer-Nickel-Lotes verbunden.
Die US-A-4 358 506 beschreibt einen Werkstoffverbund, der einen Graphitbereich und einen Bereich aus Zinn, Blei, Indium mit einem Karbid- oder Karbonyl-bildenden Zusatz umfasst. Durch die Verwendung von Zinn, Blei und Indium in Kombination mit dem Karbid- oder Karbonyl-bildenden Zusatz werden Entnetzungsvorgänge während weiterer Prozessschritte vermieden. Dieser Verbundkörper kann durch einen Lötvorgang mit Kupfer verbunden werden.

Derartig hergestellte Werkstoffverbunde, im speziellen CFC-Kupferverbunde, weisen eine deutlich verbesserte Festigkeit auf. Für hoch beanspruchte Werkstoffverbunde, wie dies beispielsweise Kühlelemente für Fusionsreaktoren darstellen, ist es wünschenswert, dieses Festigkeitsniveau weiter zu erhöhen.

Ziel dieser Erfindung ist es daher, einen Werkstoffverbund mit verbesserter Festigkeit, im speziellen höherer Festigkeit im Fügebereich Kupfer / Grafit, und ein Verfahren zu dessen Herstellung bereitzustellen.

Erfindungsgemäß wird das durch den im Anspruch 1 offenbarten Werkstoffverbund erreicht.
Der erfindungsgemäße Werkstoffverbund umfasst einen Bereich aus Kupfer oder einer Kupferlegierung, einen Bereich aus einem überwiegend grafitischen Werkstoff und einen dazwischen liegenden Fügebereich. Unter Fügebereich ist dabei jener Bereich zu verstehen, wo Kupfer / die Kupferlegierung mit dem grafitischen Werkstoff stoffschlüssig verbunden ist. Der Fügebereich wird von den Fügeflächen der zu verbindenden Werkstoffe begrenzt und umfasst neben diesen Fügeflächen Phasenbestandteile, die zwischen die Fügepartner eingebracht werden oder die sich während des Fügeprozesses ausbilden. Der erfindungsgemäße Fügebereich enthält zumindest ein Karbid eines Elements der Gruppe Ti, V und zumindest ein Element der Gruppe Si, Ge. Es ist dabei nicht wesentlich, in welcher Bindungsform Si und Ge auftreten. So wurden diese Elemente in erfindungsgemäßen Verbundwerkstoffen in Form einer karbidischen Verbindung, als intermetallische Phase, und hier wieder bevorzugt mit Ti oder V, elementar und / oder gelöst detektiert.

Gemäß dem Stand der Technik (EP 0 663 670 B1) wurde bis dato in den Fügebereich zwischen Kupfer und dem grafitischen Werkstoff nur ein stark karbidbildendes Element, bevorzugt Titan, eingebracht. Dieser Prozess wird auch als Aktivierung bezeichnet. Während des Fügeprozesses, z.B. durch Hintergießen, bildet sich dabei eine durchgehende Titankarbidschicht auf dem grafitischen Werkstoff aus, die das Benetzungsverhalten für Kupfer günstig beeinflusst. Durch die Aktivierung mittels Titan erreicht man eine sehr hohe Festigkeit in der Grenzfläche Kupfer / Titankarbid. Eine Schwachstelle bildet jedoch dabei immer die Zone, wo das Titankarbid in den grafitischen Werkstoff übergeht.
Es hat sich nun in überraschender Weise gezeigt, dass bei Aktivierung mit zumindest einem Element der Gruppe Ti, V und zumindest einem Element der Gruppe Si, Ge, die zu den schwach karbidbildenden Elementen zählen, unter Ausbildung eines Karbides oder Mischkarbides zumindest eines Elements der Gruppe der Ti, V eine deutliche Erhöhung der Verbundfestigkeit, im speziellen der Scherfestigkeit im Fügebereich erreicht werden kann, die wesentlich durch die Festigkeit der Zone, wo das Titankarbid in den grafitischen Werkstoff übergeht, bestimmt wird. Die Phasenbereiche der Si- und / oder Ge-Karbide und / oder intermetallischen Phasen der zuvor genannten karbidbildenden Elemente sind vorteilhafterweise inselförmig ausgebildet.
Zu den besonders vorteilhaften, stark karbidbildenden Elementen sind Ti und V zu zählen, wobei mit Ti die besten Ergebnisse erzielt werden konnten. Grundsätzlich ist zu erwähnen, dass die schwach und stark karbidbildenden Elemente auch in elementarer Form im Fügebereich vorliegen können. Zudem können sie im grafitischen Werkstoff (z.B. als Karbid) und im Kupfer / in der Kupferlegierung (z.B. gelöst oder ausgeschieden) enthalten sein, vorteilhafterweise angereichert in den jeweiligen Fügeflächen.
Die besten Resultate konnten mit einer Ti- und Si- Aktivierung erzielt werden unter Vorliegen von TiC, Ti₅Si₃ und SiC in der Fügezone. Dabei liegt die Scherfestigkeit im Fügebereich über der des CFC.
Aufgrund der hohen Wärmeleitfähigkeit von Kohlefaser-verstärktem Grafit (CFC) und Reinkupfer, beispielsweise OFHC-Kupfer, eignet sich diese Werkstoffpaarung besonders für die Herstellung des erfindungsgemäßen Werkstoffverbundes. Der CFC kann dabei auch Anteile an SiC oder anderen gut wärmeleitfähigen Phasenbestandteilen enthalten. Die Verbundfestigkeit zwischen dem überwiegend grafitischen Werkstoff und Kupfer / der Kupferlegierung kann durch ein Strukturieren des überwiegend grafitischen Werkstoffes verbessert werden. Das Strukturieren kann beispielsweise durch Bohrungen, die mittels Laser hergestellt werden, erfolgen.

Als besonders geeignetes Verfahren zur Herstellung des erfindungsgemäßen Werkstoffverbundes ist das Hintergießen zu nennen. Beim Hintergießprozess wird Kupfer / die Kupferlegierung in schmelzflüssigem Zustand mit dem Grafit in Kontakt gebracht. Dies erfolgt in einer Form aus einem hitzebeständigen Werkstoff, wobei die Negativkontur der Form in etwa der Positivkontur des Werkstoffverbundes entspricht.

Die Elemente der Gruppe der Ti, V, Si, Ge können beispielsweise durch Beschichten eines oder beider Fügepartner aber auch das Einlegen einer oder mehrerer Folien zwischen die Fügepartner eingebracht werden. Als Beschichtungsverfahren sind beispielsweise galvanische Verfahren, aber auch CVD- und PVD-Verfahren, geeignet. Bevorzugt liegen dabei die Elemente der Gruppe der Ti, V, Si und Ge in der Schicht bzw. in der Folie in elementarer Form vor. Zwischen den Elementen der Gruppe der Ti, V, Si und Ge treten nonvariante Umwandlungen, verbunden mit einer Absenkung der Solidus- und Liquidustemperatur auf, was zu einem verbesserten Benetzungsverhalten führt. Diese Elemente können jedoch grundsätzlich auch in anderer Form, zum Beispiel als Verbindung oder Legierung, vorliegen. Die Bildungsenergie der Verbindungen von Ti und V muss jedoch geringer als die Bildungsenergie des jeweiligen Karbides sein.

Erfolgt das Einbringen durch Beschichtung ist es vorteilhaft, wenn die Schicht auf dem grafitischen Teil abgeschieden wird. Damit wird ein inniger Kontakt zwischen dem karbidbildenden Element und der Kohlenstoffquelle, dem Grafit, sichergestellt. Als Stärkenbereich der Schicht / Folie haben sich 10 und 50 µm bewährt. In einem separaten Prozessschritt können die karbidbildenden Elemente auch erschmolzen bzw. teilweise zu Karbid umgesetzt werden.
Es ist vorteilhaft, wenn der Anteil eines Elementes der Gruppe Si, Ge bezogen auf den Anteil eines Elementes der Gruppe der Ti, V so gewählt wird, dass die daraus entstehende Legierung eutektische Phasenanteile aufweist.
Es hat sich zudem als vorteilhaft erwiesen, zunächst ein oder mehrere schwach karbidbildende Elemente der Gruppe Si, Ge in elementarer Form auf dem grafitischen Teil abzuscheiden oder als elementare Folie auf dem grafitischen Teil aufzubringen. In einem weiteren Schritt wird der grafitische Teil und Schicht / Folie auf eine Temperatur über der Schmelztemperatur des schwach karbidbildenden Elementes erhitzt. Bei Vorliegen einer Legierungsschicht oder Legierungsfolie erfolgt das Erhitzen zumindest auf eine Temperatur > Solidustemperatur. Bei Verwendung einer Legierung, die beispielsweise zwei oder mehrere karbidbildende Elemente enthält, ist es vorteilhaft, auf Legierungen mit eutektischen Gefügebestandteilen zurückzugreifen. Besonders vorteilhaft sind dabei eutektische oder nah-eutektische Legierungen.
Werden mehr als ein karbidbildendes Element verwendet, kann der Prozess auch mehrstufig erfolgen.

Eine besonders hohe Festigkeit der Verbindung Grafit und Kupfer Kupferlegierung kann erreicht werden, wenn ein grafitischer Werkstoff mit Si beschichtet wird, wobei die Beschichtungsfläche oberflächlich strukturiert ist. Das Beschichten mit Si kann beispielsweise dadurch erfolgen, dass ein siliziumhältiger Slurry auf dem grafitischen Teil aufgebracht wird. Der so beschichtete Teil wird danach auf eine Temperatur über der Si-Schmelztemperatur in Schutzgas oder Vakuum erhitzt. Auf dem so hergestellten Teil wird ein stark karbidbildendes Element, bevorzugt Ti, beispielsweise in Form einer Folie aufgebracht. Der Si-Anteil und der Ti-Anteil sind bevorzugt so zu wählen, dass bei deren Umsetzung eutektische Gefügebestandteile entstehen. In einem weiteren Prozessschritt erfolgt das Aufschmelzen der Ti-Folie in Schutzgas oder Vakuum. Es können jedoch das Aufschmelzen des Si und des Ti auch in einem Prozessschritt durchgeführt werden. Die Temperatur muss dabei zumindest über der Solidustemperatur der entsprechenden Legierung sein.
Die Schmelze dringt dabei in die Mikroporen bzw. in die Makrobohrungen der strukturierten Oberfläche des Grafits ein. Dabei kommt es zu einer teilweisen Umsetzung des Ti mit dem C des Grafitteiles unter Bildung von TiC. Si, als das schwächer karbidbildende Element setzt sich nur zu einem geringen Anteil mit C um und bildet mit Ti die intermetallische Phase Ti₅Si₃. Zudem können geringe Anteile an SiO₂ detektiert werden, was vermutlich auf adsorbierten Sauerstoff bzw. geringfügige O-Anteile in der Prozessatmosphäre zurückzuführen ist.
Der in dieser Weise vorbehandelte Grafitteil wird in eine Form aus hitzebeständigem Material gelegt und an dessen behandelter Oberfläche mit Kupfer oder einer Kupferlegierung in der gewünschten Menge bedeckt. Danach wird der gesamte Verbund bis zur Verflüssigung des Kupfers / der Kupferlegierung erhitzt. Die metallischen Ti-Anteile lösen sich innerhalb kurzer Zeit in der Kupferschmelze auf. Nach dem Erstarren des Kupfers bzw. der Kupferlegierung liegt eine feste und stoffschlüssige Verbindung zwischen Kupfer und der Kupferlegierung und dem grafitischen Teil vor, wobei Ti im Fügeflächenbereich im Cu in angereicherter Form vorliegt.

Als vorteilhafte Verwendung des erfindungsgemäßen Werkstoffverbundes ist dessen Einsatz als Kühlelement und hier wiederum bevorzugt als Divertor oder Limiter in einem Fusionsreaktor zu nennen.

Im Folgenden wird die Erfindung an Hand folgender Herstellungsbeispiele näher erläutert.

Zur Herstellung erfindungsgemäßer Werkstoffverbunde wurden prismatische Teile aus faserverstärktem Grafit (CFC) mit den Abmessungen 200 x 100 x 50 mm³ auf der 200 x 100 mm² Seitenfläche durch Einbringung von senkrecht zur Oberfläche verlaufenden Bohrungen mit einem Durchmesser von ca. 100 µm mittels Laser strukturiert. Nach der Reinigung des Grafitteiles wurde auf der so strukturierten Oberfläche ein Slurry aufgetragen, in dem je nach Versuch unterschiedliche, schwach karbidbildende Elemente dispergiert wurden. Die Auftragmenge wurde so berechnet, dass dies theoretisch einer dichten Bedeckung mit dem jeweiligen Element von 6 µm entspräche. Die verwendeten Elemente sind in der nachfolgenden Tabelle 1 wiedergegeben. Die so behandelten Teile wurden bei einer Temperatur 40°C über der Liquidustemperatur des jeweiligen schwach karbidbildenden Elementes 60 Minuten in Vakuum geglüht. In einem weiteren Prozessschritt wurde die behandelte Fläche je nach Versuch mit einer 20 µm starken Titan- oder Vanadinfolie belegt und der Teil wiederum in Vakuum auf eine Temperatur von 1.720°C (Ti) bzw. 1950°C (V) erwärmt. Die Haltezeit auf Temperatur betrug 60 Minuten. Nach Abkühlen auf Raumtemperatur wurde ein mit Ultraschall gereinigter Kupferblock mit der Abmessung 200 x 100 x 50 mm³ auf den mit Ti bzw. V bedeckten Bereich positioniert und dieser Stapel in eine Form aus Grafit eingebracht, wobei die Länge und Breite der Form im Wesentlichen der Länge (200 mm) und Breite (100 mm) des Werkstoffstapels entsprach. Danach wurde der Werkstoffstapel in einem induktiv beheizten Ofen auf 1150°C erhitzt. Nach dem Ausbau des so hergestellten Werkstoffverbundes wurde dieser einem Scherversuch unterzogen. Vergleichsweise wurden Stand der Technik Werkstoffverbunde ohne Einbringung schwach karbidbildender Elemente, jedoch bei ansonsten identer Prozessfolge hergestellt. Im Scherversuch zeigten die erfindungsgemäß hergestellten Werkstoffverbunde (Beispiele 3 bis 8) im Vergleich zum Stand der Technik (Beispiele 1 und 2) eine deutlich verbesserte Scherfestigkeit.

**Tabelle 1**

| Versuchsnummer | Versuchsteil | Schwach karbidbildendes Element | Stark karbidbildendes Element | Scherfestigkeit [MPa] |
|---|---|---|---|---|
| 1 | Stand der Technik | - | Ti | 33 |
| 2 | Stand der Technik | - | V | 25 |
| 3 | erfindungsgemäß | Si | Ti | 67 |
| 4 | erfindungsgemäß | Si | V | 54 |

## Patentansprüche

1. Werkstoffverbund, der zumindest einen Bereich aus Kupfer oder einer Kupferlegierung, zumindest einen Bereich aus einem überwiegend grafitischen Werkstoff und zumindest einen dazwischen liegenden Fügebereich umfasst,
**dadurch gekennzeichnet,**
**dass** der Fügebereich zumindest ein Element der Gruppe Si, Ge und zumindest ein Karbid zumindest eines Elements der Gruppe Ti, V enthält.

2. Werkstoffverbund nach Anspruch 1, **dadurch gekennzeichnet, dass** der Fügebereich Si und/oder Ge in Form einer karbidischen Verbindung und / oder als intermetallische Phase und / oder in gelöster und / oder in elementarer Form enthält.

3. Werkstoffverbund nach Anspruch 2, **dadurch gekennzeichnet, dass** der Fügebereich ein Karbid oder Mischkarbid zumindest eines Elements der Gruppe Si, Ge enthält.

4. Werkstoffverbund nach einem der Ansprüche 1 bis 3, **dadurch gekennzeichnet, dass** der Fügebereich zumindest ein Karbid oder Mischkarbid des Ti und / oder V enthält.

5. Werkstoffverbund nach einem der Ansprüche 1 bis 4, **dadurch gekennzeichnet, dass** zumindest ein Element der Gruppe Ti, V, Si, Ge im Kupfer oder der Kupferlegierung gelöst ist.

6. Werkstoffverbund nach Anspruch 5, **dadurch gekennzeichnet, dass** das Element der Gruppe Ti, V, Si, Ge im Bereich der Kupfer-Fügefläche angereichert ist.

7. Werkstoffverbund nach einem der Ansprüche 1 bis 6, **dadurch gekennzeichnet, dass** der Fügebereich Ti-Karbid enthält.

8. Werkstoffverbund nach einem der Ansprüche 1 bis 7, **dadurch gekennzeichnet, dass** der Fügebereich Ti-Karbid und Si-Karbid enthält.

9. Werkstoffverbund nach einem der Ansprüche 1 bis 8, **dadurch gekennzeichnet, dass** der Fügebereich zumindest ein Element der Gruppe Ti, V, Si, Ge in elementarer Form enthält.

10. Werkstoffverbund nach einem der Ansprüche 1 bis 9, **dadurch gekennzeichnet, dass** der Fügebereich zumindest eine intermetallische Phase zumindest eines Elements der Gruppe Si, Ge mit zumindest einem Element der Gruppe Ti, V enthält.

11. Werkstoffverbund nach einem der Ansprüche 1 bis 10, **dadurch gekennzeichnet, dass** zumindest ein Element der Gruppe Ti, V, Si, Ge im Bereich aus dem überwiegend grafitischen Werkstoff enthalten ist.

12. Werkstoffverbund nach einem der Ansprüche 1 bis 11, **dadurch gekennzeichnet, dass** der Fügebereich eine Stärke von 0,05 bis 30 µm aufweist.

13. Werkstoffverbund nach einem der Ansprüche 1 bis 12, **dadurch gekennzeichnet, dass** im Fügebereich zumindest ein Karbid keine durchgehende Schicht bildet und bevorzugt inselförmig vorliegt.

14. Werkstoffverbund nach einem der Ansprüche 1 bis 13, **dadurch gekennzeichnet, dass** der Bereich aus dem überwiegend grafitischen Werkstoff aus kohlefaserverstärktem Grafit (CFC) besteht.

15. Werkstoffverbund nach einem der Ansprüche 1 bis 14, **dadurch gekennzeichnet, dass** der Bereich aus dem überwiegend grafitischen Werkstoff an dessen Fügefläche durch Bohrungen strukturiert ist.

16. Werkstoffverbund nach einem der Ansprüche 1 bis 15, **dadurch gekennzeichnet, dass** der Bereich aus Kupfer oder der Kupferlegierung aus sauerstoffarmem Kupfer (OFHC) besteht.

17. Werkstoffverbund nach einem der Ansprüche 1 bis 16 zur Verwendung als Kühlelement.

18. Werkstoffverbund nach Anspruch 17 zur Verwendung als Erste-Wand-Bauteil, bevorzugt als Divertor oder Limiter, in einem Fusionsreaktor.

19. Verfahren zur Herstellung eines Werkstoffverbundes, **dadurch gekennzeichnet, dass** auf einem Teil aus einem überwiegend grafitischen Werkstoff Anteile zumindest eines Elements der Gruppe Si, Ge, in elementarer Form, als Verbindung und / oder Legierung aufgebracht werden, der so behandelte Teil auf eine Temperatur über der Solidustemperatur des aufgebrachten Elements / Verbindung / Legierung erhitzt wird, so dass zumindest eine teilweise Benetzung des überwiegend grafitischen Werkstoffs erfolgt; weiters Kupfer auf eine Temperatur über dessen Schmelztemperatur oder eine Kupferlegierung auf eine Temperatur über deren Solidustemperatur erhitzt und mit dem Teil aus dem überwiegend grafitischen Werkstoff in Kontakt gebracht wird, wobei während dieses Verbindungsvorganges im Fügebereich Anteile zumindest eines Elements der Gruppe Ge, Si und zumindest ein Karbid zumindest eines Elements der Gruppe Ti, V bereitgestellt werden und danach das Kupfer oder die Kupferlegierung durch Abkühlung verfestigt.

20. Verfahren zur Herstellung eines Werkstoffverbundes nach Anspruch 19, **dadurch gekennzeichnet, dass** der Anteil zumindest eines Elements der Gruppe Si, Ge, und der Anteil zumindest eines Elements der Gruppe Ti, V so gewählt werden, dass die daraus entstehende Legierung eutektische Phasenanteile aufweist.

21. Verfahren zur Herstellung eines Werkstoffverbundes nach Anspruch 19 oder 20, **dadurch gekennzeichnet, dass** die Kupferlegierung auf eine Temperatur über deren Liquidustemperatur erhitzt wird.

22. Verfahren zur Herstellung eines Werkstoffverbundes nach einem der Ansprüche 19 bis 21, **dadurch gekennzeichnet, dass** der behandelte Teil aus dem überwiegend grafitischen Werkstoff und eine oder mehrere auf diesem Teil aufgebrachte Folie(n) zumindest eines Elements der Gruppe der Ti, V auf eine Temperatur erhitzt werden, sodass Karbidbildung eintritt und der Teil aus dem überwiegend grafitischen Werkstoff in einer Form aus einem hitzebeständigen Werkstoff an dessen behandelter Oberfläche mit Kupfer oder einer Kupferlegierung belegt und der gesamte Verbund auf eine Temperatur über der Liquidustemperatur des Kupfers oder der Kupferlegierung erhitzt wird.

23. Verfahren zur Herstellung eines Werkstoffverbundes nach einem der Ansprüche 19 bis 22, **dadurch gekennzeichnet, dass** der Werkstoffverbund als Kühlelement eingesetzt wird.

24. Verfahren zur Herstellung eines Werkstoffverbundes nach Anspruch 23, **dadurch gekennzeichnet, dass** der Werkstoffverbund als Erste-Wand-Bauteil, bevorzugt als Divertor oder Limiter, in einem Fusionsreaktor eingesetzt wird.

## Claims

1. Material composite comprising at least one region of copper or a copper alloy, at least one region of a predominantly graphitic material, and at least one joining region located between them,
**characterised in that**
the joining region comprises at least one element of the group Si, Ge and at least one carbide of at least one element of the group Ti, V.

2. Material composite according to claim 1, **characterised in that** the joining region comprises Si and/or Ge in the form of a carbidic compound and/or as an intermetallic phase and/or in dissolved form and/or in elemental form.

3. Material composite according to claim 2, **characterised in that** the joining region comprises a carbide or mixed carbide of at least one element of the group Si, Ge.

4. Material composite according to any one of claims 1 to 3, **characterised in that** the joining region comprises at least one carbide or mixed carbide of Ti and/or V.

5. Material composite according to any one of claims 1 to 4, **characterised in that** at least one element of the group Ti, V, Si, Ge is dissolved in the copper or copper alloy.

6. Material composite according to claim 5, **characterised in that** the element of the group Ti, V, Si, Ge is concentrated in the region of the copper joining surface.

7. Material composite according to any one of claims 1 to 6, **characterised in that** the joining region comprises Ti carbide.

8. Material composite according to any one of claims 1 to 7, **characterised in that** the joining region comprises Ti carbide and Si carbide.

9. Material composite according to any one of claims 1 to 8, **characterised in that** the joining region comprises at least one element of the group Ti, V, Si, Ge in elemental form.

10. Material composite according to any one of claims 1 to 9, **characterised in that** the joining region comprises at least one intermetallic phase of at least one element of the group Si, Ge with at least one element of the group Ti, V.

11. Material composite according to any one of claims 1 to 10, **characterised in that** at least one element of the group Ti, V, Si, Ge is present in the region of the predominantly graphitic material.

12. Material composite according to any one of claims 1 to 11, **characterised in that** the joining region has a thickness of from 0.05 to 30 µm.

13. Material composite according to any one of claims 1 to 12, **characterised in that**, in the joining region, at least one carbide does not form a continuous layer and is preferably present in the form of islands.

14. Material composite according to any one of claims 1 to 13, **characterised in that** the region of the predominantly graphitic material consists of carbon-fibre-reinforced graphite (CFC).

15. Material composite according to any one of claims 1 to 14, **characterised in that** the region of the predominantly graphitic material is structured on its joining surface by bores.

16. Material composite according to any one of claims 1 to 15, **characterised in that** the region of copper or the copper alloy consists of low-oxygen copper (OFHC).

17. Material composite according to any one of claims 1 to 16 for use as a cooling element.

18. Material composite according to claim 17 for use as a first-wall component, preferably as a divertor or limiter, in a fusion reactor.

19. Method for producing a material composite, **characterised in that** amounts of at least one element of the group Si, Ge are applied in elemental form, in the form of a compound and/or in the form of an alloy to a part of a predominantly graphitic material, the part so treated is heated to a temperature above the solidus temperature of the applied element/compound/- alloy so that at least partial wetting of the predominantly graphitic material takes place; further, copper is heated to a temperature above its melting temperature, or a copper alloy is heated to a temperature above its solidus temperature, and brought into contact with the part of the predominantly graphitic material, wherein amounts of at least one element of the group Ge, Si and at least one carbide of at least one element of the group Ti, V are made available in the joining region during this joining operation, and the copper or copper alloy is subsequently solidified by cooling.

20. Method for producing a material composite according to claim 19, **characterised in that** the amount of at least one element of the group Si, Ge and the amount of at least one element of the group Ti, V are so chosen that the resulting alloy contains eutectic phase constituents.

21. Method for producing a material composite according to claim 19 or 20, **characterised in that** the copper alloy is heated to a temperature above the liquidus temperature thereof.

22. Method for producing a material composite according to any one of claims 19 to 21, **characterised in that** the treated part of the predominantly graphitic material and one or more foil(s) of at least one element of the group Ti, V applied to that part are heated to a temperature such that carbide formation occurs, and the treated surface of the part of the predominantly graphitic material is covered, in a mould made of a heat-resistant material, with copper or a copper alloy and the entire composite is heated to a temperature above the liquidus temperature of the copper or copper alloy.

23. Method for producing a material composite according to any one of claims 19 to 22, **characterised in that** the material composite is used as a cooling element.

24. Method for producing a material composite according to claim 23, **characterised in that** the material composite is used as a first-wall component, preferably as a divertor or limiter, in a fusion reactor.

## Revendications

1. Matériau composite qui comprend au moins une région de cuivre ou d'un alliage de cuivre, au moins une région d'un matériau principalement graphitique et au moins une région intermédiaire de jonction,
**caractérisé en ce que** la région de jonction contient au moins un élément du groupe Si, Ge et au moins un carbure d'au moins un élément du groupe Ti, V.

2. Matériau composite selon la revendication 1, **caractérisé en ce que** la région de jonction contient du Si et/ou du Ge sous forme d'une combinaison carburée et/ou en tant que phase intermétallique et/ou sous forme dissoute et/ou élémentaire.

3. Matériau composite selon la revendication 2, **caractérisé en ce que** la région de jonction contient un carbure ou un carbure mixte d'au moins un élément du groupe Si, Ge.

4. Matériau composite selon l'une quelconque des revendications 1 à 3, **caractérisé en ce que** la région de jonction contient au moins un carbure ou un carbure mixte de Ti et/ou de V.

5. Matériau composite selon l'une quelconque des revendications précédentes, **caractérisé en ce qu'**au moins un élément du groupe Ti, V, Si, Ge est dissous dans le cuivre ou l'alliage de cuivre.

6. Matériau composite selon la revendication 5, **caractérisé en ce que** l'élément du groupe Ti, V, Si, Ge est enrichi dans la région de la surface cuivre-jonction.

7. Matériau composite selon l'une quelconque des revendications précédentes, **caractérisé en ce que** la région de jonction contient du carbure de Ti.

8. Matériau composite selon l'une quelconque des revendications précédentes, **caractérisé en ce que** la région de jonction contient du carbure de Ti et du carbure de Si.

9. Matériau composite selon l'une quelconque des revendications précédentes, **caractérisé en ce que** la région de jonction contient au moins un élément du groupe Ti, V, Si, Ge sous forme élémentaire.

10. Matériau composite selon l'une quelconque des revendications précédentes, **caractérisé en ce que** la région de jonction contient au moins une phase intermétallique d'au moins un élément du groupe Si, Ge avec au moins un élément du groupe Ti, V.

11. Matériau composite selon l'une quelconque des revendications précédentes, **caractérisé en ce qu'**au moins un élément du groupe Ti, V, Si, Ge est contenu dans la région constituée du matériau principalement graphitique.

12. Matériau composite selon l'une quelconque des revendications précédentes, **caractérisé en ce que** l'épaisseur de la région de jonction est de 0,05 à 30 µm.

13. Matériau composite selon l'une quelconque des revendications précédentes, **caractérisé en ce qu'**au moins un carbure ne constitue pas une couche continue dans la région de jonction et s'y trouve de préférence sous forme d'îlots.

14. Matériau composite selon l'une quelconque des revendications précédentes, **caractérisé en ce que** la région constituée du matériau principalement graphitique se compose de graphite armé de fibres de carbone (CFC).

15. Matériau composite selon l'une quelconque des revendications précédentes, **caractérisé en ce que** la région constituée du matériau principalement graphitique est structurée par des alésages à sa surface de jonction.

16. Matériau composite selon l'une quelconque des revendications précédentes, **caractérisé en ce que** la région de cuivre ou d'alliage de cuivre se compose de cuivre exempt d'oxygène à haute conductivité (OFHC).

17. Matériau composite selon l'une quelconque des revendications précédentes destiné à une utilisation comme élément refroidisseur.

18. Matériau composite selon la revendication 17 destiné à une utilisation comme composant de première paroi, de préférence comme déflecteur ou limiteur, dans un réacteur de fusion.

19. Procédé de fabrication d'un matériau composite, **caractérisé en ce que** des ingrédients contenant au moins un élément du groupe Si, Ge sous forme élémentaire et/ou en tant que combinaison et/ou alliage sont appliqués sur une pièce en matériau principalement graphitique, et que la pièce ainsi traitée est chauffée à une température supérieure à la température de solidus de l'élément / la combinaison / l'alliage appliqué afin qu'il en résulte au moins un mouillage partiel du matériau principalement graphitique; **en ce que** du cuivre ou un alliage de cuivre est ensuite respectivement chauffé à une température supérieure à son point de fusion ou à une température supérieure à sa température de solidus et est amené en contact avec la pièce en matériau principalement graphitique, et que tant des ingrédients contenant au moins un élément du groupe Ge, Si qu'au moins un carbure d'au moins un élément du groupe Ti, V sont disposés ou préparés dans la région de jonction pendant ce processus de combinaison, le cuivre ou l'alliage de cuivre étant ensuite solidifié par refroidissement.

20. Procédé de fabrication d'un matériau composite selon la revendication 19, **caractérisé en ce que** l'ingrédient contenant au moins un élément du groupe Si, Ge et l'ingrédient contenant au moins un élément du groupe Ti, V sont sélectionnés d' une manière telle que l'alliage qui en résulte comprend des ingrédients à phases eutectiques.

21. Procédé de fabrication d'un matériau composite selon la revendication 19 ou 20, **caractérisé en ce que** l'alliage de cuivre est chauffé à une température supérieure à sa température de liquidus.

22. Procédé de fabrication d'un matériau composite selon l'une quelconque des revendications 19 à 21, **caractérisé en ce que** la pièce traitée en matériau principalement graphitique et une ou plusieurs feuille(s) d'au moins un élément du groupe Ti, V appliquée(s) sur cette pièce sont chauffées à une température telle qu'il en résulte une formation de carbure, et la pièce en matériau principalement graphitique est revêtue, sur sa surface traitée, de cuivre ou d'un alliage de cuivre dans un moule en matériau réfractaire, et le composite tout entier est chauffé à une température supérieure à la température de liquidus du cuivre ou de l'alliage de cuivre.

23. Procédé de fabrication d'un matériau composite selon l'une quelconque des revendications 19 à 22, **caractérisé en ce que** le matériau composite est employé comme élément refroidisseur.

24. Procédé de fabrication d'un matériau composite selon la revendication 23, **caractérisé en ce que** le matériau composite est employé comme composant de première paroi, de préférence comme déflecteur ou comme limiteur, dans un réacteur de fusion.
